# EUROPEAN PATENT SPECIFICATION

(11) **EP 1 275 870 B1**
(45) Date of publication and mention of the grant of the patent: **17.12.2003**
(21) Application number: 02012542.3
(22) Date of filing: 05.06.2002
(51) Int. Cl.: F16D 65/097

(54) **Disk brake with integrated brake lining**
Scheibenbremse mit intergriertem Bremsbelag
Frein a disque avec garniture de frein intégrée

(30) Priority: 11.07.2001 DE 10133579
(43) Date of publication of application: 15.01.2003
(73) Proprietor: Federal-Mogul Friction Products GmbH, 65520 Bad Camberg (DE)
(72) Inventor: Denton, Peter G., 51688 Wipperfürth (DE); Strauss, Wilfried, 69483 Wald-Michelbach (DE)
(74) Representative: Becker Kurig Straus

(56) References cited:
- EP-A- 0 248 385
- EP-A- 0 402 835
- EP-A- 0 745 781
- GB-A- 1 241 929
- GB-A- 2 343 720
- US-A- 4 197 352

## Description

The present invention relates to an integrated brake lining, a brake caliper with an integrated brake lining, and a disk brake including these components. Specifically, the present invention relates to brake linings comprising a supporting plate and a friction lining and receiving elements for a hold-down spring.

Usually, disk brakes are composed of a brake disk and a brake caliper with a plurality of brake linings. Disk brakes are used in motor vehicles and in machines to brake shafts or wheels. The brake linings used in the brake caliper generally consist of a supporting element and a friction lining. The main advantages of disk brakes over drum brakes which are sometimes still in use today are lower weight, improved heat dissipation and easier maintenance.

Such brake linings are, for example, described in the patent specification laid open to public inspection DE 197 05 836 A1. DE 197 05 836 A1 describes a brake lining whose support comprises a sandwich structure to save weight and to improve the mechanical properties of the brake lining.

At high loads, brake linings are often loaded by so-called pressure distributor plates more uniformly in order to avoid a more non-uniform abrasion of the brake linings. In addition, pressure distributor plates allow the use of thinner and hence more lightweight brake linings. The use of pressure distributor plates and so-called hold-down springs is explained, for example, in EP 0 248 385 B1. EP 0 248 385 B1 illustrates in particular the use and necessity of hold-down springs. The hold-down devices serve to fix the brake linings in the brake anchor plate.

To reduce the weight of the brake linings and to simplify the manufacturing method, the brake lining and the supporting plate may be made of one material. This is particularly clearly described in publication EP 0 745 781 A2. In that publication, brake linings are described whose supporting plate and friction lining are composed of the same material. This results in the main advantage that the entire brake lining can be manufactured in one operation.

It is an object of the present invention to provide a brake lining, a brake caliper and a disk brake which can be manufactured easily, at low cost and in only a few operations and which comprise receiving devices or supplying elements for hold-down springs and accessories to meet the increased safety and comfort requirements of a brake assembly.

According to one aspect of the present invention, the invention provides a brake lining for disk brakes. In the brake lining according to the invention, the supporting plate and the friction lining are made from the same material. The brake lining further comprises receiving elements for hold-down springs. The friction lining of which the supporting plate and the mounting elements for the hold-down springs are made is made of the same material. The supporting plate and the receiving elements are integrally formed in one piece. This simplifies manufacture enormously.

The brake lining further comprises at least one further receiving element for accessories. The accessories may be a wear indicator or a wear sensor. Alternatively, the accessories may be a temperature sensor, a cooling device or an insulating device. The accessories may be integrated into the brake lining even during manufacture. Alternatively, the accessories may be an acceleration sensor which, for example, can provide information on the instantaneous condition of the road, the unbalance in the wheel, possible damage to the disk brake, wheel bearings, wheel suspension or tyre and/or tyre pressure. A suitable acceleration sensor with an appropriate signal processing. e. g. with Fourier analysis, is able to detect damage in time before an extensive damage or a breakdown occurs.

The friction lining, supporting plate and receiving elements are integrally made from one material. This ensures an inexpensive production of the brake lining. The material may comprise the mechanical properties of the friction lining. The material of the supporting plate and friction lining may, however, be characterized by a different micro- or macrostructure or by a different density. Of course, this also applies to the receiving elements and accessories. The strength values required for the receiving elements may be varied, e. g. the receiving elements may be designed to be thicker. Another way to change the mechanical properties of the receiving elements is to particularly compress or cross-link the material, e. g. a thermosetting plastic, through partial process design.

Alternatively, the receiving elements may be incorporated into the brake lining as a separate component during manufacture. The accessories may also be incorporated directly into the brake lining. For example, a leaf or coil spring (e. g. in a guiding means), a temperature sensor and/or a wear sensor may be incorporated directly into the brake lining during manufacture.

The brake lining or the friction lining and the supporting plate may be made of all friction lining materials known to those skilled in the art. Typically, friction linings are made of sintered materials or thermosetting plastics in a material compound. Usually, sintered materials consist of mixtures of ferrous and non-ferrous metals. Thermosetting plastics may be made from phenolic resins, epoxy resins, etc. Thermosetting plastics are reinforced with fibres and other filling materials to optimize the material properties. The fibres may be natural, mineral, polymer, metal, aramide and/or carbon fibres, for example. The fibres may be processed in a fibrous condition, as chips, as-spun, as-inweaved, as-knitted and/or e. g. as a fleece. Metallic filling materials may be, for example, ferrous or non-ferrous metals such as Fe, Sn, Zn, Ni, Ag, Al, Mg and/or Mn. Nonferrous filling materials may be, for example, mineral substances such as calcium hydroxide, heavy spar, rubber and/or vermiculite.

Preferably, the brake lining further comprises a heat insulator. This heat insulator may be directly contained in the brake lining or may be located in or on the brake lining as an independent layer. The particular shape of the heat insulator is of no importance. The heat insulator may be formed by incorporated air pockets, particular structures such as spongy structures or other materials.

The object of the present invention is further accomplished by a brake caliper for a disk brake. In the brake caliper according to the invention, hold-down springs prevent the brake linings from strongly moving within the lining shafts for receiving the brake linings and hence from damaging the lining shafts. Each brake lining comprises a supporting plate, at least one friction lining and receiving elements for the hold-down spring all of which are made from the same material. The receiving elements and the supporting plate are integrally connected to each other.

The brake caliper and/or brake lining further comprise mounting elements for accessories. The brake linings and/or brake tongs comprise receiving devices for accessories. Both the supporting plate and the friction lining are made from the same material. The brake linings may be made in one piece. The receiving devices for the accessories and the hold-down springs in the brake linings are either made from the same material or another suitable material. The brake calipers require additional receiving or supplying devices for the supply of the accessories of the brake linings or for additional accessories.

The accessories may be a wear indicator of the brake lining or a temperature sensor in the brake lining which issues a danger signal at overheating of or additional damage to the brake lining. Further accessories may be, for example, a fluid cooler for the brake caliper which can prevent vapour lock in the brake system or damage to the brake caliper or brake fluid. In addition, the brake caliper may comprise supply lines for the wear sensor, temperature sensor, etc.

The object is accomplished according to another aspect of the invention by providing a disk brake comprising a brake disk, a brake caliper and brake linings. The brake caliper comprises a lining shaft in which the brake linings are held down by means of springs. The springs support themselves on the brake caliper and in receiving elements for the springs which are formed on the brake lining. Each brake lining comprises a supporting plate and at least one friction lining. The friction lining, supporting plate and receiving elements are all made from the same material and the receiving elements and the supporting plate are integrally connected to each other.

The disk brake including the brake caliper and/or brake lining comprises additional mounting elements for accessories. The disk brake may comprise additional accessories in or on the brake disk, such as wear indicators or temperature sensors for the brake disk. In addition, a special feature of the brake lining may be that receiving devices for accessories are incorporated into the brake lining. The accessories may also be incorporated into the brake lining during manufacture or may be firmly connected to the brake lining. The brake caliper and, if required, the brake disk may be provided with receiving or supplying elements to receive or supply the or additional accessories. In the most simple case, the accessories are another hold-down spring needed to prevent the disk brake from damage when used in a wheel suspension. Alternatively, the accessories may be a wear sensor incorporated into the brake lining or fixed to the brake lining which indicates that the brake lining must be replaced. In vehicles, the advantage over conventional wear indicators is that wear is sensible without needing to detach the wheel. As the wear sensor, depending on the design, must be supplied or requires at least an electric line to pass on a signal, the brake caliper must also be provided at least with a cable or another supply line.

Additional accessories which may be fixed to the brake caliper may be anti-lock braking system sensors, a compressed-air cooler for the brake disk, a telemetry device for the tyre pressure or a tyre wear sensor, etc. As brake calipers are components manufactured with a very high technical precision which are usually made by means of lost-wax casting, the fastening elements for accessories are easy to integrate during manufacture.

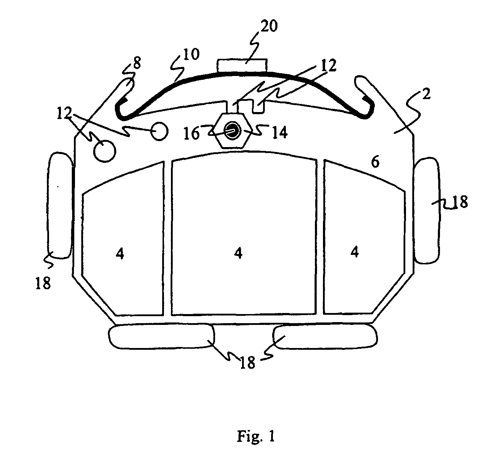

Figure 1 shows a cross section of the disk brake according to the invention.

Figure 1 shows a brake lining according to the invention. The brake lining 2 comprises a supporting plate 6 and friction linings 4 each of which are made from the same material. The supporting plate 6 comprises at one end receiving elements 8 for a hold-down spring 10. The hold-down spring 10 is shown as a leaf spring. The hold-down spring 10 serves to prevent the brake lining 2 from striking against the guides 18, 20 of the lining shaft of a brake caliper and damaging them when the chassis moves. The leaf spring 20 shown in the drawing may be supplemented with coil spring elements, for example. The supporting plate 6 further comprises receiving elements 12 for accessories. A wear sensor 16 is screwed into a receiving element 12 by means of a nut 14. Alternatively, the wear sensor 16 may be arranged in the friction lining 4 or between the friction lining 4 and the supporting plate 6. Preferably, the accessories are integrated into the brake lining 2 during the manufacture of the supporting plate 6 and friction lining 4. In addition, the structure of the brake lining 2, in which both the supporting plate 6 and the friction lining 4 are made from the same material, has the advantage that, even if the friction lining 4 is completely used up, the supporting plate 6 does not damage the brake disk, because it is made from the same material.

The disk brake, the brake caliper and the brake linings may be driven hydraulically, pneumatically, electrically, magnetically, electromechanically or even mechanically. It is to be noted that the disk brake according to the invention is suited for both external-caliper and internal-caliper disk brakes. In external-caliper disk brakes, the brake caliper reaches from the outside across the brake disk in the known manner. In internal-caliper disk brakes, the brake caliper reaches across the brake disk from the inside. The brake linings according to the invention may be used in both fixed-caliper and floating-caliper brake disks. The brake linings according to the invention are suited for both single-piston and multipiston brake calipers. The invention is not restricted to the use with a particular brake disk. The brake lining according to the invention may be used in combination with single, open-worked, grooved, structured, curved and/or internally ventilated brake disks. The brake disk may be mounted in a fixed or floating manner. Even the use in a multidisk brake is possible. In motor lorries, for example, the above fluid coolers may be designed as a compressed-air cooler in which, for example, the pneumatic system of the brake assembly fills a secured reservoir which cools the brake or parts of the brake with compressed air as required. In vehicles without a pneumatic brake system, the brakes may be connected to the existing or a separate refrigeration cycle, e. g. for oil or cooling water.

The disk brake, the brake caliper and the brake lining may be used in any technical field in which rotations are to be slowed down, namely in all automotive applications, in land crafts, rail vehicles, watercrafts, aircrafts, in which shafts and wheels need to be braked. Other applications are brakes for machines, motors, rotors, windmills, roundabouts, etc.

## Claims

1. A brake lining for disk brakes comprising a supporting plate (6), at least one friction lining (4) and receiving elements (8) for a hold-down spring (10), **characterized in that** the brake lining further comprises at least a further receiving element (12) for accessories (16) and **in that** the supporting plate (6), the friction lining (4), the receiving elements (8) for a hold-down spring (10) and the at least one further receiving element (12) for accessories are integrally made from one material.

2. The brake lining of claim 1, **characterized in that** the brake lining (2) further comprises a heat insulator to minimize the heat transmission from the brake lining (2) to the adjacent brake caliper.

3. A brake caliper for a disk brake which comprises brake linings (2) and a lining shaft (18) in which the brake linings are held down by springs (10), wherein each of the springs (10) supports itself on the brake caliper (20) and in receiving elements (8) for the springs (10) which are formed on the brake lining (2), wherein each of the brake linings (2) comprise one supporting plate (6) and at least one friction lining (4), **characterized in that** said break linings comprise at least one further receiving element (12) for accessories, **in that** the supporting plate (6), the friction lining (4), the receiving elements (8) for springs and the further receiving elements (12) for accessories are all made from the same material and **in that** the supporting plate (6), the friction lining(4) and the receiving elements (8) and the further receiving elements (12) are integrally connected to each other.

4. The brake caliper according to claim 3, **characterized in that** the brake caliper comprises mounting elements for accessories.

5. A disk brake comprising a brake disk, a brake caliper and brake linings (2), wherein the brake caliper comprises a lining shaft (18) in which the brake linings (2) are held down by springs (10), wherein the springs (10) support themselves on the brake caliper and in the receiving elements (8) for the springs (10) which are formed on the brake lining (2), each of the brake linings (2) comprising a supporting plate (6) and at least one friction lining (4), **characterized in that** said supporting plate (6) comprises further receiving elements (12) for accessories, and **in that** said friction lining (4), said receiving elements (8) for said springs (10) and said further receiving elements (12) for accessories are all made from the same material and the supporting plate (6), the friction lining (4) and the receiving elements (8) for springs (10) and the receiving elements (12) for accessories are integrally connected to each other.

6. The disk brake according to claim 5, **characterized in that** the brake caliper comprises mounting elements for accessories.

## Patentansprüche

1. Bremsbelag für Scheibenbremsen, aufweisend eine Halteplatte (6), mindestens einen Reibbelag (4) und Aufnahme-Elemente (8) für eine Niederhalte-Feder (10), **dadurch gekennzeichnet, dass** der Bremsbelag weiter mindestens ein weiteres Aufnahme-Element (12) für Zusatzeinrichtungen (16) aufweist, und dass die Halteplatte (6), der Reibbelag (4), die Aufnahme-Elemente (8) für eine Niederhalte-Feder (10) und das mindestens eine weitere Aufnahme-Element (12) für Zusatzeinrichtungen einstückig aus einem Material hergestellt sind.

2. Bremsbelag entsprechend Anspruch 1, **dadurch gekennzeichnet, dass** der Bremsbelag (2) weiter eine Hitzeisolation aufweist, um die Hitzeübertragung von dem Bremsbelag (2) zu dem benachbarten Bremssattel zu verringern.

3. Bremssattel für eine Scheibenbremse, welcher Bremsbeläge (2) und einen Belagschaft (18) aufweist, in welchem die Bremsbeläge von Federn (10) niedergehalten werden, worin jede der Federn (10) sich auf dem Bremssattel (20) und in Aufnahme-Elementen (8) für die Federn (10) abstützt, welche auf dem Bremsbelag (2) gebildet sind, worin jeder der Bremsbeläge (2) eine Halteplatte (6) und mindestens einen Reibbelag (4) aufweist, **dadurch gekennzeichnet, dass** die Bremsbeläge mindestens ein weiteres Aufnahme-Element (12) für Zusatzeinrichtungen aufweisen, dass die Halteplatte (6), der Reibbelag (4), die Aufnahme-Elemente (8) für Federn und die weiteren Aufnahme-Elemente (12) für Zusatzeinrichtungen alle aus demselben Material hergestellt sind, und dass die Halteplatte (6), der Reibbelag (4) und die Aufnahme-Elemente (8) und die weiteren Aufnahme-Elemente (12) einstückig miteinander verbunden sind.

4. Bremssattel entsprechend Anspruch 3, **dadurch gekennzeichnet, dass** der Bremssattel Befestigungselemente für Zusatzeinrichtungen aufweist.

5. Scheibenbremse, aufweisend eine Bremsscheibe, einen Bremssattel und Bremsbeläge (2), worin der Bremssattel einen Belagschaft (18) aufweist, in welchem die Bremsbeläge (2) von Federn (10) niedergehalten werden, worin die Federn (10) sich auf dem Bremssattel und in den Aufnahme-Elementen (8) für die Federn (10) abstützen, welche auf dem Bremsbelag (2) gebildet sind, wobei jeder der Bremsbeläge (2) eine Halteplatte (6) und mindestens einen Reibbelag (4) aufweist, **dadurch gekennzeichnet, dass** die Halteplatte (6) weitere Aufnahme-Elemente (12) für Zusatzeinrichtungen aufweist, und dass der Reibbelag (4), die Aufnahme-Elemente (8) für die Federn (10) und die weiteren Aufnahme-Elemente (12) für Zusatzeinrichtungen alle aus demselben Material hergestellt sind und die Halteplatte (6), der Reibbelag (4) und die Aufnahme-Elemente (8) für Federn (10) und die Aufnahme-Elemente (12) für Zusatzeinrichtungen einstückig miteinander verbunden sind.

6. Scheibenbremse entsprechend Anspruch 5, **dadurch gekennzeichnet, dass** der Bremssattel Befestigungselemente für Zusatzeinrichtungent aufweist.

## Revendications

1. Garniture de frein pour des freins à disque comprenant une plaque de support (6), au moins une garniture (4) et des éléments de réception (8) pour un ressort de maintien (10), **caractérisée en ce que** la garniture de frein comprend en outre au moins un élément récepteur (12) pour accessoires (16) et **en ce que** la plaque de support (6), la garniture (4), les éléments récepteurs (8) pour un ressort de maintien (10) et le au moins élément récepteur (12) pour accessoires sont intégralement composés à partir d'un matériau.

2. Garniture de frein selon la revendication 1, **caractérisée en ce que** la garniture de frein (2) comprend en outre un isolateur thermique pour réduire la transmission de chaleur depuis la garniture de frein (2) vers l'étrier de frein adjacent.

3. Etrier de frein pour un frein à disque qui comprend des garnitures de frein (2) et un arbre de garniture (18) dans lequel les garnitures de frein sont maintenues vers le bas par des ressorts (10), dans lequel chacun des ressorts (10) se supporte sur l'étrier de frein (20) et dans les éléments récepteurs (8) pour les ressorts (10) qui sont formés sur la garniture de frein (2), dans lequel chacune des garnitures de frein (2) comprend une plaque de support (6) et au moins une garniture (4), **caractérisé en ce que** lesdites garnitures de frein comprennent au moins un autre élément récepteur (12) pour accessoires, **en ce que** la plaque de support (6), la garniture (4), les éléments récepteurs (8) pour ressorts et les autres éléments récepteurs (12) pour accessoires sont tous composés du même matériau et **en ce que** la plaque de support (6), la garniture (4) et les éléments récepteurs (8) et les autres éléments récepteurs (12) sont intégralement reliés les uns aux autres.

4. Etrier de frein selon la revendication 3, **caractérisé en ce que** l'étrier de frein comprend des éléments de montage pour accessoires.

5. Frein à disque comprenant un disque de frein, un étrier de frein et des garnitures de frein (2), dans lequel l'étrier de frein comprend un arbre de garniture (18) dans lequel les garnitures de frein (2) sont maintenues vers le bas par des ressorts (10), dans lequel les ressorts (10) se supportent sur l'étrier de frein et dans les éléments récepteurs (8) pour les ressorts (10) qui sont formés sur la garniture de frein (2), chacune des garnitures de frein (2) comprenant une plaque de support (6) et au moins une garniture (4), **caractérisé en ce que** ladite plaque de support (6) comprend d'autres éléments récepteurs (12) pour accessoires et **en ce que** ladite garniture (4), lesdits éléments récepteurs (8) pour lesdits ressorts (10) et lesdits autres éléments récepteurs (12) pour accessoires sont tous composés du même matériau et la plaque de support (6), la garniture (4) et les éléments récepteurs (8) pour ressorts (10) et les éléments récepteurs (12) pour accessoires sont intégralement reliés les uns aux autres.

6. Frein à disque selon la revendication 5, **caractérisé en ce que** l'étrier de frein comprend des éléments de montage pour accessoires.
